# EUROPEAN PATENT APPLICATION

(11) **EP 2 389 913 A2**
(43) Date of publication of application: **30.11.2011**
(21) Application number: 11275089.8
(22) Date of filing: 27.05.2011
(51) Int. Cl.: A61G 5/06

(54) **Stair transportation device**

(30) Priority: 28.05.2010 GB 1009036
(71) Applicant: Harris, Nicholas, Aberdare CF64 6DA (GB); Kingett, Graham, Aberdare CF64 6DA (GB)
(72) Inventor: Harris, Nicholas, Aberdare CF64 6DA (GB); Kingett, Graham, Aberdare CF64 6DA (GB)
(74) Representative: Jones, Ithel Rhys

(57) **Abstract**

A device (10) for descending stairs under the control of an operator is disclosed, comprising a frame (20) for accommodating and transporting a person, at least one continuous track (32) for engaging the stairs, mounted to the frame and supporting the frame and person whilst descending the stairs, characterised in that, the device further includes a braking mechanism (50, 150) controllable by the operator during the descent to provide resistance to the movement of the or each track. The braking mechanism includes a deadlock, and a friction brake for adjusting the speed of descent of the device.

## Description

This invention relates to a device for transporting a person down stairs, for example in an emergency.

Conventional wheeled chairs are impossible to use when negotiating descents of stairs because the wheels roll over each stair, giving a bumpy ride for the person in the chair and making the chair impossible to control. Chairs are currently available commercially having a frame in which a person can sit, by means for manoeuvring the frame down the stairs. A track system is known which includes a continuous 'V' belt and pulleys spaced to stretch the belt to form two parallel lengths, like a tracked vehicle. The lowermost length of belt is long enough to span two or more stair treads, making it easier to manoeuvre a person down the stairs because the track runs only over the front edges of the stairs.

It has been found that the rate of descent of the above mentioned chair is difficult to control, particularly when a heavy person is sat in the chair and a person of lesser weight is controlling the chair. Thus, the chair can run away over the edges of the stairs.

The present invention provides a device for descending stairs under the control of an operator, comprising a frame for accommodating and transporting a person, at least one continuous track for engaging the stairs, mounted to the frame and supporting the frame and person whilst descending the stairs, characterised in that, the device further includes a braking mechanism controllable by the operator during the descent to provide resistance to the movement of the or each track.

Preferably the braking mechanism has two operative conditions, whereby in the first operative condition, the brake locks the track or tracks in position by means of a locking mechanism and in a second operative condition which adjustably controls the amount of said resistance to allow a controlled descent of the speed of device down the stairs.

Preferably, the braking mechanism is operable from a dead-man's type handle, whereby in a released position of the handle the brake is in the first operative condition, and grasping movement of the handle by the operator causes the second operative condition.

Preferably, the grasping movement of the handle away from the released position is movement against a resilient force restoring the handle to the released position, and continued movement away from the released position increasingly reduces the amount of resistance applied to the tracks to allow a controlled descent or the device down the stairs,

In an embodiment, the at least one track is a pair of spaced tracks, one at or adjacent each side of the device.

Preferably, the track or tracks are belts formed substantially from elastomeric material, and include a pair of pulleys, mounted to the frame, spaced to tension the or each belt.

Preferably, the face of the belt which is opposite the stair facing surface includes ridges running along the length of the belt.

More preferably a belt guide is disposed between the pulleys to support the belt against substantial deformation in use.

In an embodiment the guide is an elongate member having an overall thickness which is less than the diameter of the pulleys so the guide fits substantial within a space formed between two spaced lengths of the belt which run between the two pulleys.

Preferably, the frame includes one or more wheels or rollers, or the like (here in referred to as wheels) in addition to the or each track, said wheels being supported on an axle in turn being rotatably supported on the frame adjacent a lower part of the frame for wheeling a person in the chair over a generally level surface, and the braking mechanism is operable to resist or prevent rotation of the wheels also.

Preferably the braking mechanism includes a brake disk mounted for rotation with the axle, optionally said axle supporting a drive, said drive being in torque transmitting communication with one or more of the pulleys such that restraint of the rotation of the disk thereby restrains the rotation of one or more of said pulleys and said pair of wheels.

Preferably the restraint of rotation of the disk in the first condition is brought about by a retractable pin which in one non-retracted position engages one or more apertures in the disk, wherein said pin is held by said frame to resist movement with the disk in the first position.

Preferably the restraint of rotation of the disk in the second condition, is brought about by retracting the pin from the disk and operating a calliper to increase the force applied to said disk and to thereby increase said friction, said calliper being connected to the frame to resist movement of the disk.

Preferably the restraint of rotation of the disk in the second contiion is brought about by retracting the pin from the disk and moving a wedge out of engagement with the belt to reduce friction on the belt and allow controlled decent of the device.

In an embodiment the device further includes at least one additional castor wheel mounted aft of the axle, on the frame.

Preferably, the at least one additional castor wheel is mounted to the frame on a swinging arm and said arm is foldable toward the frame.

Preferably, the fame includes a seating area and a cross rail above and aft of the seat area, and the handle is pivotably mounted at or adjacent the cross rail.

Preferably the handle is operatively connected to two Bowden type cables, one for moving the pin and the other for operating the wedge or calliper.

In an embodiment, said frame and tracks are collapsible to lie substantially flat

The invention can be put into effect in numerous ways, one embodiment only being described and illustrated below, with reference to the drawings, wherein:
Figures 1 to 3 show different views of a stair transportation device in its deployed configuration;
Figure 4 shows the device in a folded configuration;
Figures 5 and 6 show different views of a braking mechanism suitable for use with the device shown in Figures 1 to 4;
Figure 7 shows a schematic illustration of the braking mechanism and a track suitable for use with the device shown in Figures '1 to 4;
Figure 8 shows a schematic illustration of an alternative braking mechanism; and
Figure 9 shows a section on the line XIII, XIII in Figure 8.

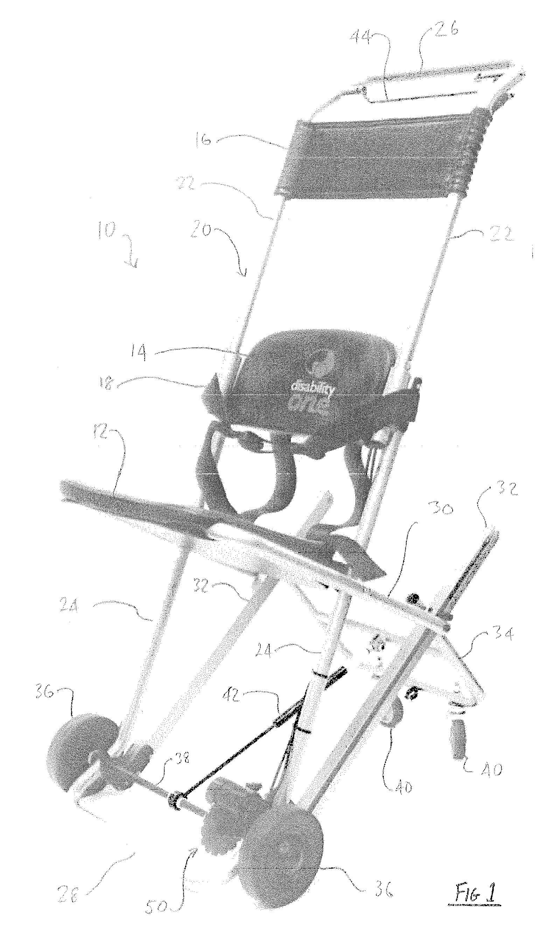

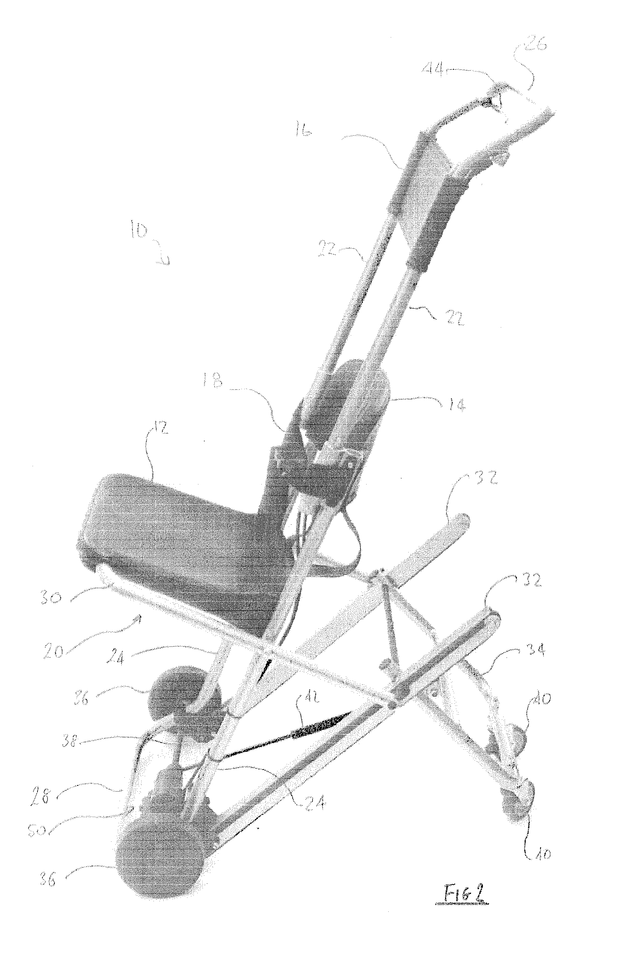

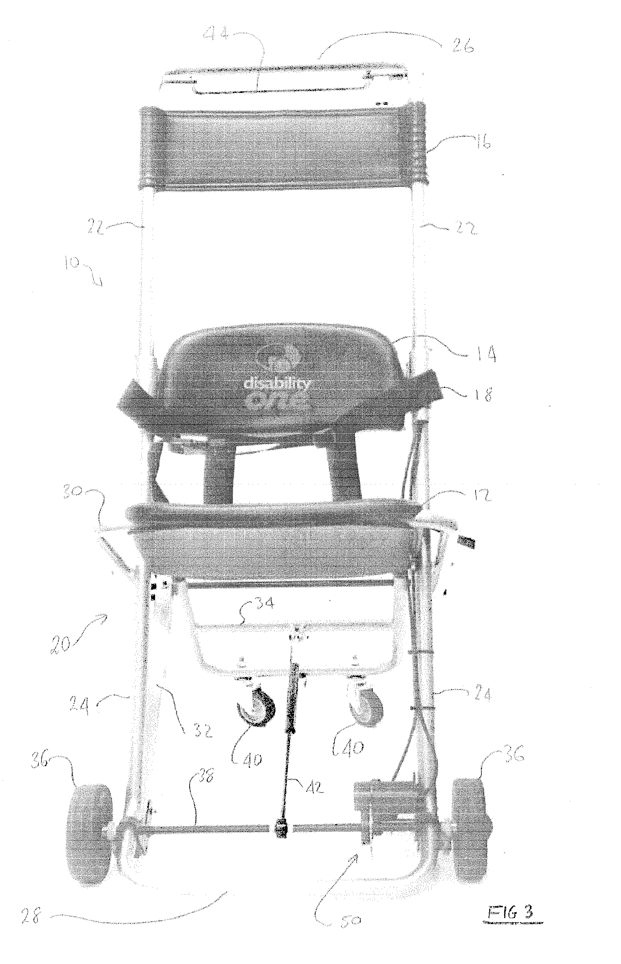

Referring to Figures 1 to 3, a chair transportation device 10 is illustrated. The device allows a person to sit on a seating area which includes a seat 12, back support 14 and a head support 16. A seatbelt 18 is used to retain a person in the seated position. The seating parts 12, 14, 16, 18 are supported by a frame 20 which is foldable to save space. The frame includes upper and lower side bars 22 and 24 respectively and upper and lower cross bars 26 and 28 respectively. The upper side bars 22 are slideable in relation to the lower side bars 24 so that the side bars 22 and 24 substantailly overlap, to reduce the size of the frame further. The frame 20 further includes a seat support 30, pivotably connected to each lower side bar 24.

Two tracks 32 are each slideably and pivotably connected to rear ends of the seat support 30. The tracks 32 are also pivotably connected to lower portions of each of the side bars 24. Pivotably connected to each track 32 is a rear castor wheel support in the form of a swinging arm 34. A pair of wheels 36 are supported on an axle 38 which is in turn rotatably supported on a lower portion of each side bar 24. The arm 34 supports two castor wheels 40. A gas sprung strut 42 pushes the arm 34 in a rearward direction to hold the same against suitable stops. The gas strut is connected between the arm 34 and the axle 38.

In operation, an operator can manoeuvre the device 10 on the wheels 36 and the castors 40, The operator can push or pull the device using the upper cross bar 26. The operator must first grasp and pull a brake release lever 44, which disengages a braking mechanism 50 which is described in more detail below. Disengaging the braking mechanism 50 allows the wheels 36 to rotate, and so allows an operator to manoeuvre the device 10 on a level surface.

Should a flight of stairs be encountered the operator can release the lever 44, tilt the device 10 forwards, and kick the castor arm 34 forwardly so that the gas spring 42 causes an over-centre action which holds the arm 34 in a folded and retracted position. Gasping of the release lever 44 allows the wheels to be pushed over the edge of the stairs and tracks 32 can engage with the edges of the stairs so that the device 10, with a person seated therein can descend the stairs. The brake release lever 44 can be grasped to control the rate of descent down the stairs, as described in more detail below.

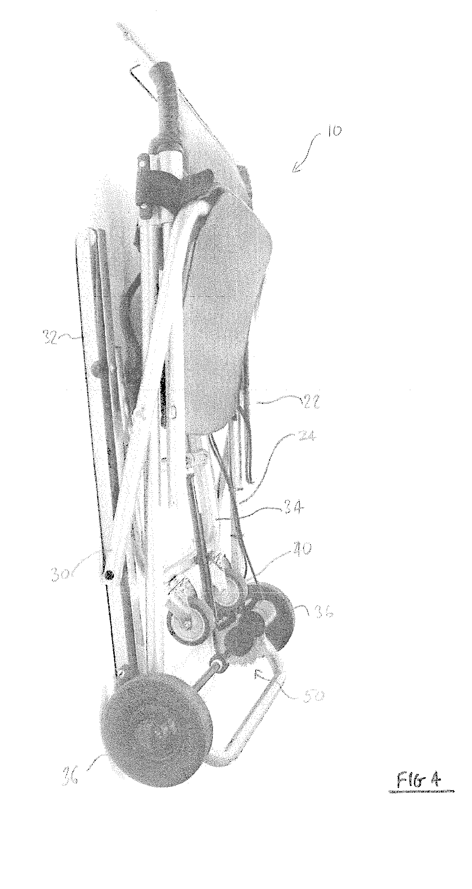

Figure 4 shows the device 10 in a folded configuration suitable for storage. In this configuration, a storage bag (not shown) can be used and the device can be hung on a wall adjacent the flight of stairs. In particular, the folded position of the castor arm 34 and castor wheels 40 is illustrated, wherein the arm 34 lies behind the tracks 32, This folded position of the castor arm 34 is employed when the device 10 is manoeuvred in the unfolded position down a flight of stairs.

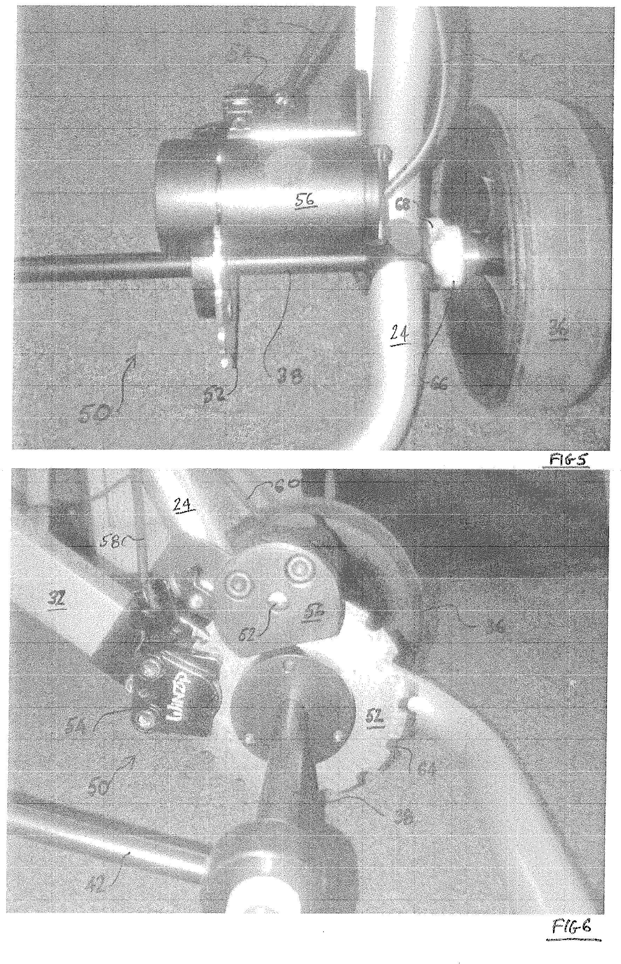

The braking mechanism 50 is more clearly shown in Figures 5 and 6. Referring to Figures 5 and 6 it can be seen that the wheels 36 are supported on the axle 38. The axle runs between lower portions of each side bar 24. Attached to the axle 38 for rotation therewith is a brake disc 52. The disc is acted upon by a brake calliper mechanism 54 and a locking mechanism 56. Each mechanism 54 and 56 has its own Bowden cable 58 and 60, each of which are connected to the release handle 44 shown in Figures 1 to 3. The locking mechanism 56 includes a slideable pin 62 which can slide in and out of any one of a series of semi-circular apertures 64 (only one of which is referenced) formed at the outer peripheral edge of the brake disc 52. Thus, operation of the release handle 44 from a fully released position withdraws the pin 62 from an aperture 64 and allows the disc 52 to rotate. A calliper mechanism 54 is capable of inhibiting the movement of the disc 52 by means of friction, when activated. Squeezing of the handle 44 gradually increases the friction exerted by the calliper mechanism 54 and thus controllably increases the friction on the disc. The mechanism 54 exerts a clamping force on the disc such that when the pin 62 is released from its respective aperture 64 and the handle 44 is squeezed, then the disc is inhibited for movement by the friction exerted by the calliper 54. Since the handle 44 is sprung into the release position letting go of the handle will cause the braking mechanism to return to its braked condition i.e. with the pin slid or urged into its locking position.

Since the braking mechanism 50 is engaged when the handle 44 is released then the device 10 will move on its wheels only when the handle is pulled. When it is desired to descend a flight of stairs, as mentioned above, the castor wheels 40 can be pushed to a folded position and the device can descend the stairs on tracks 32. In Figure 5 a drive gear 66 is shown rigidly attached to the axle 38. This drive gear 66 drives an idler gear 68 which in turn is driveably connected to one of the tracks 32.

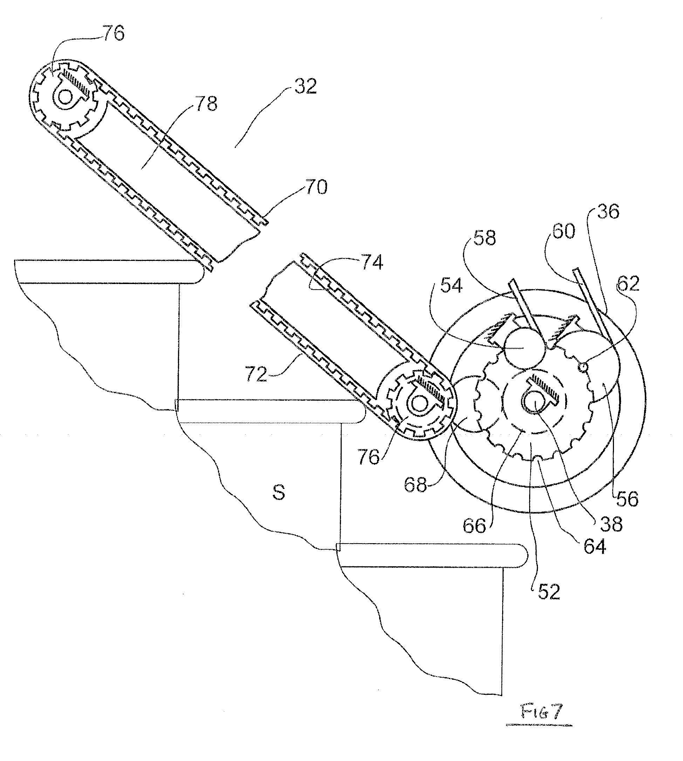

Referring additionally to Figure 7 a schematic view of the drive to the tracks is shown, In the illustration of Figure 7 the construction of the tracks 32 is more clearly shown. The tracks 32 comprise a reinforced elastomeric belt 70 which has a generally flat stair engaging outer surface 72 and a toothed inner surface 74. The tracks include also two spaced pulleys 76 which stretch the belt 70 to form two spaced lengths of belt. The pulleys 76 include outer cylindrical surfaces which have teeth complementary to the teeth formed on the inner belt surface 74. The tracks include also a support 78 which supports the inner surface 74 of the belt 70. In use, the belt moves over the outer edges of the stairs S in a caterpillar track fashion causing the pulleys 76 to rotate. Pulleys 76 are mounted to the frame members 24. The lower of the two pulleys 76 is drivingly connected to the idler gear 68 such that movement of the belt 70 when descending a stair flight causes the pulley 76 to rotate which in turn causes the idler gear 68 and the gear 66 to rotate. Consequently, the axle 38 and brake disc 52 are caused to rotate also. Thus, inhibiting rotation of the brake disc 52 using the braking mechanism 50 restricts the descent of the device 10 down a flight of stairs. In use, pulling the handle 44 at the top of a flight of stairs releases the pin 62, and further pulling of the handle 44 applies the grip of the calliper 54 such that the brake disc 52 is allowed to rotate in a controlled manner and the tracks are permitted to move on the stairs S. So, the controlled descent of the device 10 is accomplished. Should the operator wish to stop the descent then he or she simply has to release the handle 44. At the bottom of the stairs the handle 44 can be released, the device can be tipped forward and the castor wheels 40 can be pulled into the operative position shown in. Figures 1 to 3 so that chair device can once again be wheeled on level ground, again by pulling the handle 44.

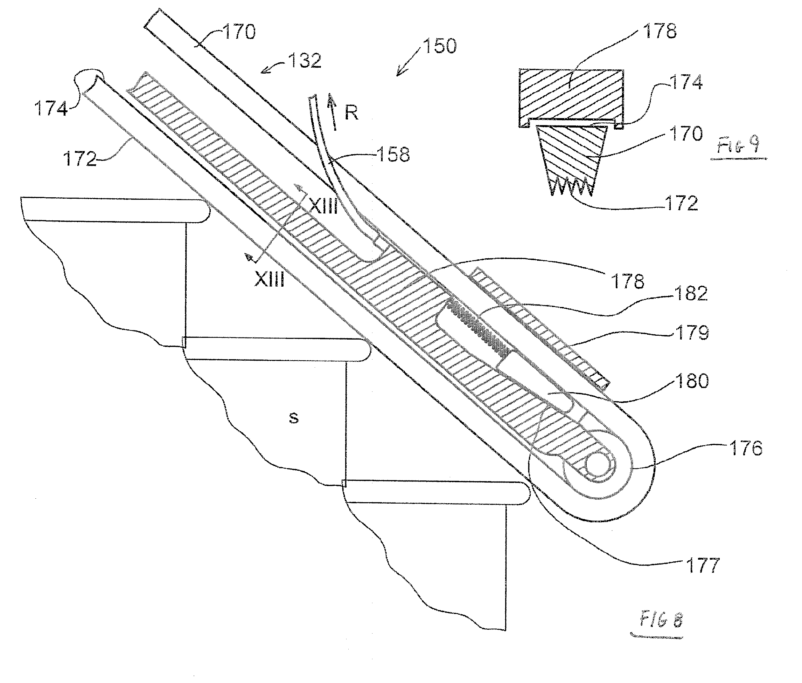

Figure 8 shows a schematic illustration of an alternative braking mechanism 150. In this embodiment, a pair of belts 170 are employed as described above, each mounted between two spaced pulleys 176 and supported on a support 178. ln the illustration, only one pulley 176 is illustrated, but it will be apparent that an opposing pulley will be mounted to the opposite end of the support 178 illustrated, similar to the arrangement of pullies 76 shown in Figure 7. ln this embodiment, a wedge 180 is forced toward the pulley 176 by means of a braking spring 182. The force of the braking spring 182 pushes the wedge 180 to cause the belt 170 to become bound between the wedge and an upper surface 179 of the support 178. On its opposite face the wedge 180 reacts against a tapered surface 177 of the support 178.

ln operation, this braking mechanism relies on the brake disc 52 and locking pin 62 described above. When that deadlock mechanism is released then gradual movement of the handle pulls a Bowden cable 158 in the direction arrow R and subsequently causes the release of the wedge 80 from its frictionally bound condition in order to allow the belt 170 to move on the pulleys 176 and thus to allow the descent of the device down stairs.

In this embodiment, gradual pulling of the brake handle 44 reduces the friction exerted on the belt 170 and allows the said decent.

Figure 9 shows a cross section through the belt 170 and its support 178. It will be noted that the belt 170 includes an inner surface 174 which slides on the support 178 and an outer surface 172 which engages with the edges of the stairs illustrated in Figure 8. ln this embodiment the outer surface 172 includes a plurality of ridges which extend along the length of the belt. It has been found that these ridges increase the traction between the edges of the stairs and the belt. Although the belt could include transversely extending teeth on its outside edge, it has been found that the longitudinal ridges illustrated provide a better grip. Shoulders are formed on the edge of the support 178 to keep the belt 170 in place when side loads are exerted.

The arrangements shown in Figures 7 and 8 can be used on both sides of the device such that a pair of tracks 32 which are both controllable by the handle 44 can be employed. However, it is possible that just one mechanism could be employed and the remaining track of the pair could be simply freewheeling.

It will be appreciated that various alternatives, modifications and omissions are possible within the scope of the invention. In particular, only one braking mechanism 50 has been described and illustrated, although other braking mechanisms could be employed, for example speed limiting mechanisms could be used which employ a centrifugal clutch or vanes rotating in a viscous liquid such that their speed is restricted. Further, the braking mechanism could comprise two relatively moveable surfaces which are sprung together such that their friction controls movement of the track. In another alternative the movement of the tracks may be controlled by friction between the tracks and their supporting surfaces. Alternatively, the pulleys 67 which rotate with the movement of the track 70 may be restricted, for example by friction. Such alternatives fall within the ambit of the definition of a braking mechanism.

The tracks 32 mentioned have continuous elastomeric belts, but other stair engaging elements could be used, for example a series of links joined by pivot pins, fibrous rope-like elements or a series of closely spaced wheels or rollers. In each case there will be a means for restriction the movement of elements. Such alternatives fall within the ambit of the definition of a track.

The stair transportation device described and illustrated has particular use in evacuating persons, for example persons suffering from smoke inhalation, down fire escapes and the like, particularly where an operator of the device is not strong and/or the person that needs transportation is perhaps heavy. The foldable nature of the device allows storage at the head of a staircase without obstruction of the stairs.

## Claims

1. A device (10) for descending stairs under the control of an operator, comprising a frame (20) for accommodating and transporting a person, at least one continuous track (32) for engaging the stairs, mounted to the frame and supporting the frame and person whilst descending the stairs, **characterised in that** the device further includes a braking mechanism (50, 150) controllable by the operator during the descent to provide resistance to the movement of the or each track.

2. A device as claimed in claim 1, wherein the braking mechanism (50, 150) has two operative condition, whereby in the first operative condition, the braking mechanism locks the track or tracks in position by means of a locking mechanism (56) and in a second operative condition which adjustably controls the amount of said resistance to allow a controlled descent of the speed of device down the stairs.

3. A device as claimed in claim 1 or 2 wherein the braking mechanism (50,150) is operable from a dead-man's type handle (44), whereby in a released position of the handle the brake is in the first operative condition, and grasping movement of the handle by the operator causes the second operative condition.

4. A device as claimed in claim 3, wherein the grasping movement of the handle away from the released position is movement against a resilient force for restoring the handle to the released position, and continued movement away from the released position increasingly reduces the amount of resistance applied to the tracks to allow a controlled descent of the device down the stairs.

5. A device as claimed in any one of the preceding claims, wherein the at least one track is a pair of spaced tracks, one at or adjacent each side of the device.

6. A device as claimed in any one of the preceding claims wherein the track or tracks include belts (70, 170) formed substantially from elastomeric material, and include a pair of pulleys, mounted to the frame, spaced to tension the or each belt.

7. A device as claimed in claim 6, wherein the face of the belt which is facing the stairs includes longitudinal ridges (172) running along the length of the belt.

8. A device as claimed in claim 6, wherein a belt guide (78, 178) is disposed between the pulleys to support the belt against substantial deformation in use.

9. A device as claimed in claim 6, wherein the guide (78, 178) is an elongate member having an overall thickness which is less than the diameter of the pulleys so the guide fits substantially within a space formed between two spaced lengths of the belt which run between the two pulleys.

10. A device as claimed in any one of the preceding claims, wherein the frame includes one or more wheels(36) or rollers, or the like in addition to the or each track, said wheels being supported on an axle (38) in turn being rotatably supported on the frame adjacent a lower part of the frame for wheeling a person in the chair over a generally level surface, and the braking mechanism is operable to resist or prevent rotation of the wheels also.

11. A device as claimed in claim11, wherein the braking mechanism includes a brake disk (52) mounted for rotation with the axle, optionally said axle supporting a drive (66), said drive being in torque transmitting communication with one or more of the pulleys such that restraint of the rotation of the disk thereby restrains the rotation of one or more of said pulleys and said pair of wheels.

12. A device as claimed in claim 2, wherein the restraint of rotation of the disk in the first condition is brought about by a retractable pin (62) which in one non-retracted position engages one or more apertures (64) in the disk, wherein said pin is held by said frame to resist movement with the disk in the first position.

13. A device as claimed in claim 2, wherein the restraint of rotation of the disk in the second condition, is brought about by retracting the pin from the disk and operating a calliper (54) to increase the force applied to said disk and to thereby increase said friction, said calliper being connected to the frame to resist movement of the disk.

14. A device as claimed in claim 2, wherein the restraint of rotation of the disk in the second condition is brought about by retracting the pin from the disk and moving a wedge (180) out of engagement with the belt to reduce friction on the belt and allow controlled decent of the device.

15. ln an embodiment the device further includes at least one additional castor wheel mounted aft of the axle, on the frame, optionally the at least one additional castor wheel (40) being mounted to the frame on a swinging arm (34) and said arm is foldable toward the frame; and/or the frame includes a seating area (30) and a cross rail (26) above and aft of the seat area, and the handle is pivotably mounted at or adjacent the cross rail; and/or the handle is operatively connected to two Bowden type cables (58,60,158), one for moving the pin and the other for operating the wedge or calliper; and/or said frame and tracks are collapsible to lie substantially flat.
